# EUROPÄISCHE PATENTSCHRIFT

(11) **EP 2 909 856 B1**
(45) Veröffentlichungstag und Bekanntmachung des Hinweises auf die Patenterteilung: **21.02.2018**
(21) Anmeldenummer: 13785385.9
(22) Anmeldetag: 18.10.2013
(51) Int. Cl.: H01J 61/94, C02F 1/32, H01J 65/04, H01J 61/16, H01J 61/20

(54) **UV-LICHTQUELLE MIT KOMBINIERTER IONISATION UND BILDUNG VON EXCIMERN**
UV LIGHT SOURCE HAVING COMBINED IONIZATION AND FORMATION OF EXCIMERS
SOURCE DE LUMIÈRE UV AVEC IONISATION ET FORMATION D'EXCIMÈRES COMBINÉE

(30) Priorität: 19.10.2012 DE 102012219064
(43) Veröffentlichungstag der Anmeldung: 26.08.2015
(73) Patentinhaber: Fraunhofer-Gesellschaft zur Förderung der angewandten Forschung e.V., 80686 München (DE); SICO Technology GmbH, 9530 Bad Bleiberg (AT)
(72) Erfinder: ELKIN, Bentsian, 70794 Filderstadt (DE); LOHNER, Alexander, 70563 Stuttgart (DE); EGNER, Siegfried, 74740 Adelsheim (DE)
(74) Vertreter: DREISS Patentanwälte PartG mbB
(86) Internationale Anmeldenummer: PCT/EP2013/071880
(87) Internationale Veröffentlichungsnummer: WO 2014/060592

(56) Entgegenhaltungen:
- EP-A1- 0 385 205
- DE-A1- 3 320 597
- DE-B3-102006 022 970
- DE-C1- 4 430 300
- JP-A- 2010 218 729
- US-A- 4 255 663
- US-A1- 2009 039 757
- US-B1- 6 193 894

## Beschreibung

### Stand der Technik

Die Erzeugung von UV-Licht und VUV-Licht durch die Anregung von Gasen oder Gasgemischen mit hochfrequenten elektrischen Wellen, insbesondere mit Mikrowellen, ist bspw. aus der DE 10 2006 022 970 B3 bekannt. Dieser UV-Strahler ist sehr einfach aufgebaut und sehr zuverlässig.

Aus DE 2009 025 667 A1 ist eine Quecksilber-Niederdrucklampe bekannt.

Aus der EP 0 458 140 A1 ist ein Excimer-Strahler bekannt, der UV-Licht und/oder VUV-Licht emittiert.

Die aus der DE 10 2009 025 667 A1 bekannte Lampe arbeitet ähnlich wie eine mit Gas gefüllte Leuchtstoffröhre. Durch eine geeignete Anregung (z. B. durch energiereiche Elektronen) der Moleküle dieses Gases werden eine oder mehrere Elektronen der in dem Gas befindlichen Moleküle auf eine energiereichere Elektronenbahn gehoben werden. Sobald diese Elektronen wieder auf die ursprüngliche Elektronenbahn zurückkehren, wird Energie frei, die in Form von Licht, insbesondere UV-Licht emittiert wird.

Auch die JP 2010 218729 A zeigt eine Vorrichtung zur Erzeugung von UV-Licht oder Vakuum-UV-Licht mit mehreren gasgefüllten Plasmakammern. Die Gasfüllungen umfassen verschiedene Excimer-Füllungen, wie z.B. quersilberhaltige ionisierbare Gase.

Diese herkömmlichen Entladungslampen sind hinlänglich bekannt und haben sich in der Praxis bewährt. Ein besonderer Vorteil solcher lonisationsstrahler mit einem Gas, das Quecksilber oder Verbindungen davon enthält, ist darin zu sehen, dass ein Großteil des emittierten Lichts eine Wellenlänge von etwa 254 nm hat und dieses Licht sehr effektiv, das heißt mit einem guten Wirkungsgrad erzeugt wird.

Dieses Licht mit einer Wellenlänge von 254 nm hat eine desinfizierende Wirkung. Es wird vermutet, dass dieses Licht die DNA der beispielsweise das Abwasser oder Trinkwasser verunreinigenden Mikroben beschädigt oder sogar zerstört. Allerdings wird in der Literatur berichtet, dass sich die derart behandelten Mikroben relativ rasch wieder erholen.

Ein Excimer-Strahler, wie er beispielsweise aus der EP 0 458 140 A1 bekannt ist, arbeitet nach einem anderen physikalischen Prinzip.

Laut der Internet-Enzyklopädie Wikipedia handelt es sich bei einem Excimer (Kurzform von "excited dimer") um ein kurzlebiges Teilchen, das aus zwei oder mehr zusammenhängenden Atomen besteht. Die Besonderheit gegenüber einem Molekül besteht darin, dass das Excimer nur gebildet werden kann, wenn einer der Bindungspartner sich in einem angeregten Zustand befindet. Verliert dieses Teilchen Energie, trennen sich die Bindungspartner und kehren in den Grundzustand zurück. Im Grundzustand haben die vormaligen Bindungspartner eine abstoßende Wirkung auf einander.

Die bei der erfindungsgemäßen Vorrichtung eingesetzten Excimer-Strahler emittieren Licht mit einer Wellenlänge, die spezifisch für das eingefüllte Gas beziehungsweise Gasgemisch ist.

Der Erfindung liegt die Aufgabe zugrunde, eine Vorrichtung zur Erzeugung von UV-Licht bereitzustellen, die einfach aufgebaut ist und welche eine sehr effektive und wirksame Abtötung von Keimen, zum Beispiel in Abwasser, erlaubt.

Diese Aufgabe wird mit einer Vorrichtung zur Erzeugung von UV-Licht gemäß Anspruchs 1 gelöst.

Dies ist dies möglich, wenn die Plasmakammern der zweiten Gruppe zwischen einer Scheibe und den Plasmakammern der ersten Gruppe angeordnet sind.

Durch die erfindungsgemäße Vorrichtung wird UV- Licht mit unterschiedlichen Wellenlängen emittiert.

Das Licht, das aus dem quecksilberhaltigen Gas oder Gasgemisch in der ersten Gruppe von Plasmakammern entsteht, hat eine Wellenlänge von etwa 254 nm und kann mit einem sehr hohen Wirkungsgrad von etwa 40% erzeugt werden. Auch ist die Desinfektionswirkung sehr gut, weil dieses UV-Licht die DNA der Mikroben zumindest angreift, wenn nicht sogar zerstört.

Das UV-Licht aus der zweiten Gruppe von Plasmakammern hat eine kürzere Wellenlänge als das zuvor beschriebene UV-Licht und ist somit energiereicher. Es wird vermutet, dass daher die organische Masse der mikrobiellen Zelle angegriffen wird. Dies ist eine nachhaltige Schädigung der mikrobiellen Zelle und bewirkt daher auch eine nachhaltige Entkeimung.

Durch diesen kombinierten Angriff einerseits auf die DNA der Mikroben und andererseits die Oxidation der organischen Masse der Mikroben wird eine sehr wirkungsvolle und langandauernde Desinfektionswirkung erreicht. Dabei verstärken sich die beiden "Angriffe" wechselseitig, so dass die desinfizierende Wirkung besser ist als wenn nur UV-Strahlung aus einer Lichtquelle eingesetzt wird.

Weil beide Lampentypen in einer gemeinsamen Vorrichtung zusammengefasst sind, ist der apparative Aufwand zudem niedriger; manche Komponenten können sogar doppelt genutzt werden. Beispielsweise können die Mikrowellen-Generatoren die in beiden Gruppen von Plasmakammern befindliche Gase zu einer elektrischen Entladung anregen. Dies führt insgesamt zu reduzierten Herstellungs- und Betriebskosten und erhöht die Effizienz.

Die Anregung der ersten Gruppe von Plasmakammern kann über Elektroden erfolgen, über eine induktive Kopplung und/oder Mikrowellen. Bei der zweiten Gruppe von Plasmakammern kann die Gasfüllung mit Hilfe einer Dielectric Barrier Discharge (DBC), d.h. einer dielektrisch behinderten Entladung, einer kapazitiven Entladung, einer induktiven Kopplung und/oder Mikrowellen erzeugen.

Grundsätzlich ist es auch möglich, die in der ersten Gruppe und der zweiten Gruppe von Plasmakammern befindlichen Gase oder Gasgemische auf unterschiedliche Arten und Weisen anzuregen, um UV-Licht zu erzeugen. Daher kann den Randbedingungen des Einsatzgebiets entsprechend aus den zuvor genannten Möglichkeiten ausgewählt werden.

Eine sehr effektive und effiziente Art die Mikrowellen in die Plasmakammern einzukoppeln besteht darin, die Mikrowellen als Oberflächen gebundene Wellen in beispielsweise eine Außenwand oder eine andere Wand der Plasmakammern einzukoppeln (engl.: surface-wave-sustained plasma). Dann verbreitet sich die elektromagnetische Welle entlang der Grenze der Medien mit unterschiedlichen Brechungskoeffizienten. In diesem Fall ist eines der Medien die Wand, das andere das Plasma und das dritte Medium ggf. die Außenluft. Das elektrische Feld der Mikrowellenstrahlung dringt bis zu einer gewissen Tiefe in das Plasmagas ein (sogenannte evaneszente Welle) und regt dort eine elektrische Ladung und in folge dessen eine Plasmabildung an.

Es ist möglich, das Magnetron zur Erzeugung von Mikrowellen außerhalb oder innerhalb der Kammer anzuordnen. Wenn das Magnetron außerhalb der Kammer angeordnet ist, dann weist die Kammer in der Regel eine Öffnung auf, durch die die Mikrowellen in die Kammer gelangen. Alternativ können die in den Plasmakammern befindlichen Gase auch durch oberflächengebundene Wellen angeregt werden.

Es ist jedoch auch ohne Weiteres möglich, außerhalb der Kammer Elektroden für eine Dielectric Barrier Discharge (DBD) und/oder einer kapazitiven Entladung oder Spulen zur induktiven Kopplung (ICP) vorzusehen.

Da die Lampeneffizienz der ersten Gruppe von Plasmakammern mit steigender Temperatur zunimmt und das zu desinfizierende Abwasser üblicherweise Temperaturen kleiner 20° C hat, ist in erfindungsgemäßer Weiterbildung vorgesehen, dass zwischen einer Scheibe der Kammer und der ersten Gruppe von Plasmakammern die Wärmedämmung vorgesehen ist. Diese Wärmedämmung kann beispielsweise durch das in der Vorrichtung befindliche Gas erfolgen, wenn die Plasmakammern der ersten Gruppe mit einem gewissen Abstand zu der Scheibe angeordnet sind.

Zur weiteren Verbesserung der Wärmedämmung kann jedoch auch noch eine für UV-Licht transparente Wärmedämmung in Form einer Kammer, die beispielsweise vakuumiert ist oder mit Stickstoff gefüllt ist, zwischen die Scheibe und den oder die Plasmakammern der ersten Gruppe von angeordnet werden. Diese zusätzliche Kammer dient als für UV-Licht transparente Wärmedämmung.

Bei der zweiten Gruppe von Plasmakammern, in denen durch Anregung Excimer gebildet werden, ist es erstrebenswert, die Kühlwirkung des zu desinfizierenden Abwassers auszunützen, weil die Effizienz mit zunehmender Temperatur zurückgeht. Daher ist es vorteilhaft, wenn die Plasmakammern der zweiten Gruppe in direktem und gut wärmeleitendem Kontakt zu der Scheibe der erfindungsgemäßen Vorrichtung sind.

Die erfindungsgemäße Vorrichtung kann als rechteckiges Gebilde mit einer oder zwei ebenen Scheiben ausgeführt sein. Es ist jedoch auch möglich, alle Bauteile in der Art eines Zylinders konzentrisch um eine Mittelachse anzuordnen. Dann ist üblicherweise das Innere dieser kreisringförmigen Anordnung von dem zu desinfizierenden Abwasser durchströmt und die Scheibe ist ein (zylindrisches) Rohr aus Glas, durch welches das zu reinigende Abwasser strömt. Konzentrisch um diese rohrförmige Scheibe herum sind dann die Plasmakammern in Form von ringförmigen Kammern angeordnet.

Durch das von der erfindungsgemäßen Vorrichtung emittierte UV-Licht unterschiedlicher Wellenlänge können verschiedenste photochemische und photophysikalische Prozesse so angeregt werden, dass diese Prozesse gleichmäßig und mit hoher Reaktionsgeschwindigkeit ablaufen. Beispielsweise ist die Desinfektion von Trink- und Abwässern, Abgasen und von festen Stoffen, wie bspw. Lebensmitteln besonders wirksam, weil die Bakterien mit zwei verschiedenen Wirkmechanismen angegriffen werden.

Weitere vorteilhafte Ausgestaltungen der Erfindung sind den Unteransprüchen entnehmbar. Im Übrigen wird bezüglich der konstruktiven Ausgestaltung der Vorrichtung auf die DE 10 2006 Bezug genommen.

Die erfindungsgemäße Vorrichtung kann auch in einen Kanal eingebaut werden, sodass das durch den Kanal strömende Medium, wie beispielsweise Trink- oder Abwasser, mit UV-Licht bestrahlt und dadurch desinfiziert werden kann.

Weitere Vorteile und vorteilhafte Ausgestaltungen der Erfindung sind der nachfolgenden Zeichnung, deren Beschreibung und den Patentansprüchen entnehmbar.

### Zeichnung

### Es zeigen

Figur 1: eine isometrische Darstellung einer erfindungsgemäßen Kammer teilweise geschnitten;
Figur 2: eine isometrische Darstellung eine erfindungsgemäßen Kammer;
Figur 3: einen Querschnitt durch eine erfindungsgemäße Kammer;
Figur 4: eine isometrische Darstellung einer erfindungsgemäßen Vorrichtung mit Kammer, Wellenleiter und mehreren Magnetrons.
Figur 5: ein Querschnitt durch eine Einbausituation und
Figuren 6 bis 12: verschiedene Ausführungsbeispiele erfindungsgemäßer Vorrichtungen.

### Beschreibung der Ausführungsbeispiele

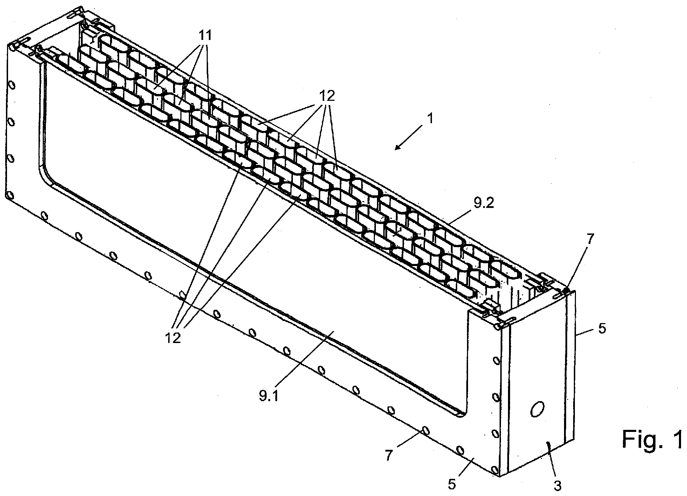

In Figur 1 ist eine Vorrichtung 1 eines Ausführungsbeispiels einer erfindungsgemäßen Vorrichtung in einer Isometrie geschnitten dargestellt.

Die Vorrichtung 1 besteht aus einem umlaufenden Rahmen 3. An einer Vorderseite des Rahmens 3 ist eine Blende 5 angeschraubt. Die Schraubenlöcher dieser Schraubverbindung sind mit dem Bezugszeichen 7 versehen. Die Blende 5 dient zur Aufnahme einer Scheibe 9. Diese Scheibe 9 ist aus einem Material hergestellt, welches durchlässig für UV-Licht und/oder VUV-Licht ist. Auf der Scheibe 9 kann ein Gitter (nicht dargestellt) aufgebracht werden, welches undurchlässig für Mikrowellenstrahlung ist, jedoch UV-Licht passieren lässt. Durch das Zurückhalten der Mikrowellen werden die Effizienz erhöht und ein geschlossener Käfig nach Farraday gebildet.

Im Inneren der Vorrichtung 1 sind eine Reihe von Plasmakammern 11 und zwei Reihen von Plasmakammern 12 angeordnet. Die Plasmakammern 11 bilden eine erste Gruppe und die Plasmakammern 12 bilden eine zweite Gruppe.

Die Plasmakammern 11 sind mit einem deutlichen Abstand zu den Scheiben 9.1 bzw. 9.2 angeordnet.

Dadurch wird eine Wärmeübertragung von den Scheiben 9, auf die erste Gruppe von Plasmakammern 11 deutlich reduziert oder sogar vollständig unterbunden.

Dies ist deshalb vorteilhaft, weil die Plasmakammern 11 der ersten Gruppe mit einem quecksilberhaltigen Gas oder Gasgemisch gefüllt sind, welches mit zunehmender Betriebstemperatur mehr UV-Licht emittiert. Daher ist eine Kühlung dieser ersten Gruppe von Plasmakammern 11 durch das zu desinfizierende Trinkwasser oder Abwasser, welches an den Scheiben 9 vorbeiströmt, unerwünscht. Im Übrigen stellen die Plasmakammern 12 der zweiten Gruppe auch eine Wärmedämmung zwischen den Plasmakammern 11 und den Scheiben 9.1 bzw. 9.2 dar.

Auf der Rückseite des Rahmens 3 sind ebenfalls eine Blende 5 und eine Scheibe 9 vorhanden. Der Aufbau entspricht der Vorderseite, so dass auf eine detaillierte Beschreibung verzichtet werden kann.

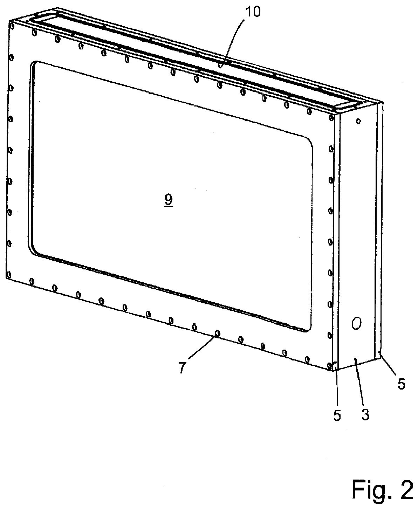

In Figur 2 ist die Vorrichtung 1 nicht geschnitten dargestellt. Gleiche Bauteile haben die gleichen Bezugszeichen und es gilt das bezüglich Figur 1 Gesagte entsprechend. In dem Rahmen 3 sind eine oder mehrere Öffnungen 10 vorgesehen, durch die Mikrowellenstrahlung in das Innere der Kammer 1 eingekoppelt werden kann.

Durch die Öffnung 10 an der Oberseite der Kammer 1 gelangen Mikrowellenstrahlungen in das Innere der Kammer 1. Dort regen die Mikrowellen das in den Plasmakammern 11 und 12 befindliche Gas oder Gasgemisch zur Emission von UV-Licht und/oder VUV-Licht an. Durch die Wahl des Gases und des im Inneren der Plasmakammern 11 herrschenden Drucks, kann die Wellenlänge des von den Plasmakammern 11 emittierten Lichts in weiten Bereichen eingestellt werden. In den Plasmakammern 11 und 12 der ersten Gruppe und der der zweiten Gruppe findet jeweils eine Anregung der Gase beziehungsweise Gasgemische statt. Beides führt zur Emission von UV-Licht, allerdings bei unterschiedlichen Wellenlängen.

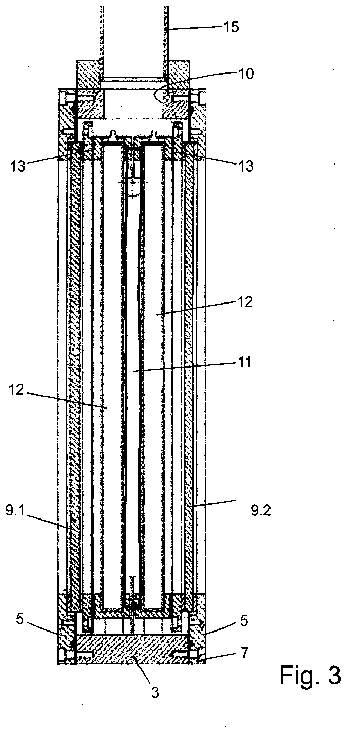

In Figur 3 ist ein Querschnitt durch eine erfindungsgemäße Vorrichtung dargestellt. Wie aus Figur 3 ersichtlich, wird die Scheibe 9 an der Blende 5 mit Hilfe einer Klemmleiste 13 befestigt. Die Klemmleiste 13 ist mit der Blende 5 verschraubt (nicht dargestellt), so dass die Scheibe 9 zwischen der Klemmleiste 13 und der Blende 5 geklemmt wird.

Bei Bedarf kann eine Dichtung - beispielsweise aus Silikon - zwischen Scheibe 9, Blende 5 sowie Blende 5 und Rahmen 3 vorgesehen werden. Auf die Öffnung 10 in dem Rahmen 3 ist ein Wellenleiter 15 aufgesetzt.

Der Wellenleiter 15 dient dazu, die von einem oder mehreren Magnetrons 17 emittierten Mikrowellen durch die Öffnung 10 ins Innere der Kammer 1 zu leiten. Bei vielen Anwendungsfällen der erfindungsgemäßen Vorrichtung können das oder die Magnetrons 17 direkt auf den Rahmen 3 aufgesetzt werden. Der Wellenleiter 15 ist dann entbehrlich.

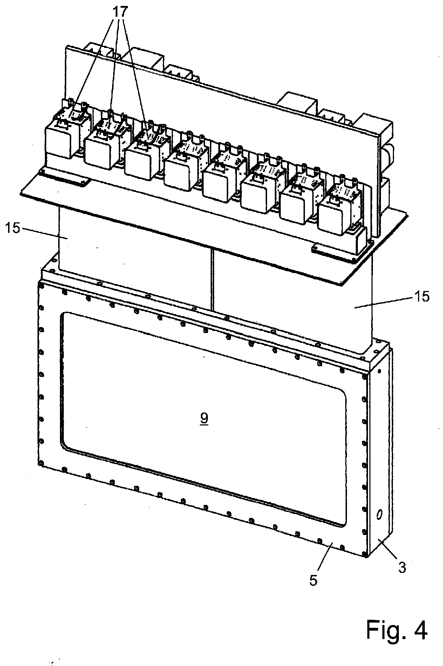

In Figur 4 ist eine isometrische Darstellung einer erfindungsgemäßen Vorrichtung, bestehend im Wesentlichen aus der Kammer 1, Wellenleitern 15 und Magnetrons 17 dargestellt.

Durch den Einsatz eines oder mehrerer von Magnetrons 17 wird über die gesamte Länge der Kammer 1 Mikrowellen in die Kammer 1 eingekoppelt werden, so dass alle Plasmakammern 11 und 12 mit etwa der gleichen Intensität von den Mikrowellen angeregt werden. Weitere Vorteile der Verwendung mehrer Magnetrons 17 sind die Verwendbarkeit kostengünstiger Standard-Magnetrons und die Betriebssicherheit wegen der mehrfachen Redundanz.

Durch die Reflexion der Mikrowellen im Inneren der Vorrichtung 1 werden die Plasmakammern 11 und 12 nahezu mit gleicher Intensität zum Leuchten beziehungsweise zum Emittieren von UV-Licht angeregt werden. Daher kann auch auf Reflektoren oder sonstige Einrichtungen zur Lenkung der Mikrowellen innerhalb der Kammer 1 verzichtet werden. Es ist auf jeden Fall vorteilhaft, wenn die Innenwände der Kammer 1 aus einem Material bestehen und/oder ein Gitter aufweisen, welches Mikrowellen reflektiert oder mit einer entsprechenden Mikrowellen reflektierenden Beschichtung versehen sind.

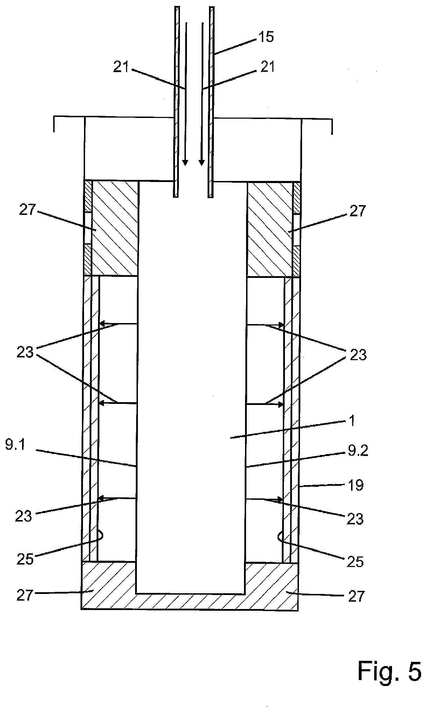

In Figur 5 ist eine erfindungsgemäße Vorrichtung 1 dargestellt, die in einen Abwasserkanal eingebaut ist und zur Desinfektion des durch den Abwasserkanal strömenden Wassers dient.

Der Kanal ist in Figur 5 mit dem Bezugszeichen 19 bezeichnet. Der gesamte Kanalquerschnitt ist mit Wasser (nicht dargestellt) gefüllt.

Die Vorrichtung 1 ist so in dem Kanal 19 angeordnet, dass die Längsrichtung der Vorrichtung 1 parallel zur Strömungsrichtung des Wassers im Kanal 19 verläuft. In dem Querschnitt gemäß Figur 5 strömt das Wasser senkrecht zur Zeichnungsebene durch den Kanal 19. Die von den Magnetrons 17 erzeugten Mikrowellen gelangen durch den Wellenleiter 15 in das Innere der Vorrichtung 1. Diese Mikrowellen sind in Figur 5 durch Pfeile 21 angedeutet. Im Inneren der Vorrichtung 1 treffen die Mikrowellen auf die Plasmakammern 11 und 12 und regen das in den Plasmakammern befindliche Gas oder Gasgemisch an, so dass dieses Gas UV-Licht oder Vakuum-UV-Licht (Excimerstrahler) emittiert.

Dieses emittierte UV-Licht ist in Figur 5 durch Pfeile 23 angedeutet. Dieses Licht unterschiedlicher Wellenlängen hat besonders gute Desinfektionseigenschaften. Infolgedessen wird das im Kanal 19 befindliche Wasser durch das von den Plasmakammern 11 und 12 emittierte UV-Licht wirksam und anhaltend desinfiziert.

An den Seitenwänden des Kanals 19 kann eine UV-Licht reflektierende Beschichtung 25 vorgesehen sein. Dadurch wird gewährleistet, dass UV-Licht, welches an die Seitenwände des Kanals 19 gelangt ist, nicht von den Seitenwänden absorbiert wird, sondern von der Beschichtung 25 reflektiert wird und erneut zur Desinfektion des Wassers dienen kann. Dadurch wird auf einfache Weise der Wirkungsgrad der erfindungsgemäßen Vorrichtung verbessert.

Um sicherzustellen, dass das gesamte durch den Kanal 19 strömende Wasser desinfiziert wird, sind in dem Kanal 19 Leitkörper 27 vorgesehen. Diese Leitkörper 27 verengen im Bereich der Lichtquelle 1 den freien Strömungsquerschnitt auf ein Maß, das auf die Abmessungen der Scheibe 9 abgestimmt ist.

In Folge dessen strömt das gesamte in dem Kanal 19 befindliche Wasser an der Scheibe 9 vorbei und gerät dabei in den durch die Pfeile 23 angedeuteten Strahlungsbereich der erfindungsgemäßen UV-Lichtquelle.

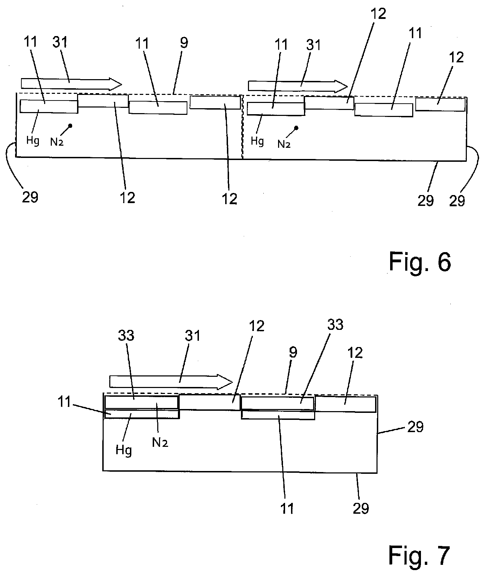

In der Figur 6 ist ein Schnitt durch ein weiteres Ausführungsbeispiel einer erfindungsgemäßen Vorrichtung 1 dargestellt.

Bei dieser Ausführung ist nur eine Scheibe 9 vorhanden. Die anderen Seiten und Wände 29 der Vorrichtung 1 bestehen aus einem für UV-Licht undurchlässigen Material, wie beispielsweise Edelstahl. An dieser Darstellung ist sehr gut zu sehen, dass die erste Gruppe von Plasmakammern 11 beabstandet zur Scheibe 9 angeordnet ist, so dass keine Wärmeleitung zwischen der Glasscheibe 9 und der Plasmakammern 11 stattfindet. Das Innere der Vorrichtung 1 ist mit Stickstoff N₂ gefüllt. Dieses Inertgas hat gute Wärmedämmeigenschaften, so dass der zwischen Scheibe 9 und Plasmakammern 11 befindliche Stickstoff N₂ die Wärmedämmung weiter verbessert.

Die zweite Gruppe von Plasmakammern 12, in denen durch die Anregung des darin befindlichen Gases oder Gasgemisches Excimer gebildet werden, sind dagegen in direktem Kontakt mit der Scheibe 9 angeordnet, so dass die Scheibe 9 bzw. das dahinter an der Scheibe 9 vorbeiströmende Wasser (nicht dargestellt) zunächst die Scheibe 9 und dadurch mittelbar auch die Plasmakammern 12 kühlt. Dadurch wird die Effizienz der UV-Lichterzeugung in den Plasmakammern 12 erhöht.

Die Fließrichtung des zu desinfizierenden Wassers (nicht dargestellt) ist durch Pfeile 31 angedeutet. Bei dieser seriellen Anordnung von Plasmakammern 11, in denen eine Ionisation stattfindet, und Plasmakammern 12, bei denen eine Bildung von Excimern stattfindet, werden die Mikroben in dem Wasser im Wechsel nacheinander mit UV-Licht unterschiedlicher Wellenlänge beaufschlagt, so dass sie wirksam und nachhaltig abgetötet werden und somit das Wasser desinfiziert wird.

In dem Ausführungsbeispiel gemäß Figur 7 ist zwischen den Plasmakammern 11 der ersten Gruppe und der Scheibe 9 eine weitere Kammer 33 angeordnet, in der sich Stickstoff N₂ oder ein Vakuum befindet. Diese Kammer 33 dient als Wärmedämmung und ist zwischen der Scheibe 9 und der Plasmakammer 11 angeordnet.

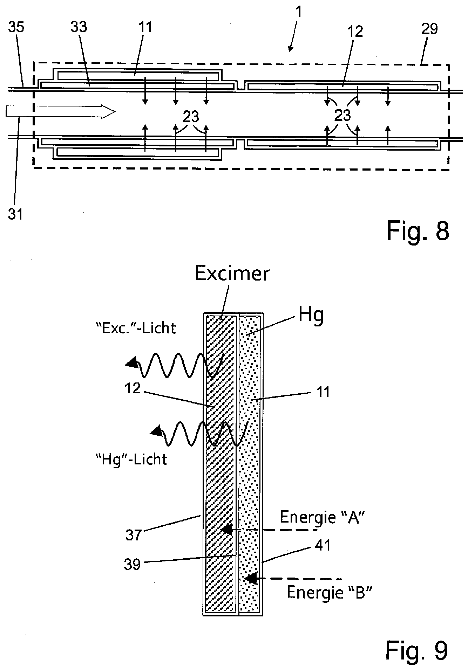

Die in den Figuren 1 bis 7 dargestellten Ausführungsbeispiele sind so gestaltet, dass die Scheibe 9 als ebene Fläche ausgebildet ist. Es ist selbstverständlich auch möglich, die Scheibe 9 als Rohr auszubilden und im Inneren dieses Glasrohres, das zu desinfizierende Wasser oder die zu desinfizierende Flüssigkeit strömen zu lassen. Solche Ausführungsbeispiele sind in den Figuren 8, 9 und 11 dargestellt. Die Funktionsweise ist vergleichbar mit den zuvor dargestellten Ausführungsbeispielen. Lediglich die Geometrie und die konzentrische Anordnung um das eine Glasrohr 35 ist anders.

In der Figur 8 ist ein erstes Ausführungsbeispiel einer rohrförmigen Vorrichtung 1 dargestellt. Im Inneren dieser Vorrichtung 1 ist ein Glasrohr 35 angeordnet, durch welches das zu desinfizierende Wasser fließt.

Die Vorrichtung 1 ist von Außenwänden 29 umgeben. Im Innenraum der Vorrichtung 1 ist eine ringförmige Kammer 33, die mit Stickstoff gefüllt ist oder in der ein Vakuum herrscht, als Wärmedämmung angeordnet. Konzentrisch zu der oder den Kammern 33 ist eine ebenfalls ringförmig ausgebildete Plasmakammer 11, die mit einem quecksilberhaltigen Gas oder Gasgemisch gefüllt ist, angeordnet.

Stromabwärts der Plasmakammer 11 ist eine weitere ringförmige Plasmakammer 12 angeordnet, in der sich ein Gas befindet, das Excimer bildet, wenn es entsprechend angeregt wird. Dies bedeutet, dass die Plasmakammern 11 und 12 UV-Licht durch das Glasrohr 35 hindurch radial nach innen in das zu desinfizierende Wasser emittieren, so dass die dort befindlichen Mikroben abgetötet werden. Um den Wirkungsgrad der Vorrichtung 1 zu erhöhen, können entweder die Wände 29 reflektierend für UV-Strahlen ausgebildet sein oder es wird an der zylindrischen Außenwand der Plasmakammern 11 und 12 eine reflektierende Beschichtung angebracht.

In der Figur 9 ist eine Ausgestaltung von Plasmakammern 11 und 12 dargestellt, bei der die Plasmakammern 11 und 12 eine gemeinsame Wand aufweisen. Es handelt sich also um ein Gebilde mit im Wesentlichen drei parallel zueinander angeordneten Wänden 37, 39, und 41.

Zumindest die Wände 37 und 39 sind durchlässig für UV-Licht. Wenn nun das in den Plasmakammern 11 und 12 befindliche Gas bzw. die dort befindlichen Gasgemische entsprechend angeregt werden, dann entsteht in der Plasmakammer 11 UV-Licht aufgrund der Ionisation des quecksilberhaltigen Gases mit einer Wellenlänge von etwa 254 nm. In der Plasmakammer 12 entsteht aufgrund der Excimerbildung ein kurzwelligeres UV-Licht mit einer Wellenlänge von etwa 200 nm. Die Plasmakammer 12 dient hierbei gleichzeitig als Wärmedämmung für die Plasmakammer 11. Die nicht dargestellte Scheibe 9 befindet sich also links der Plasmakammer 12.

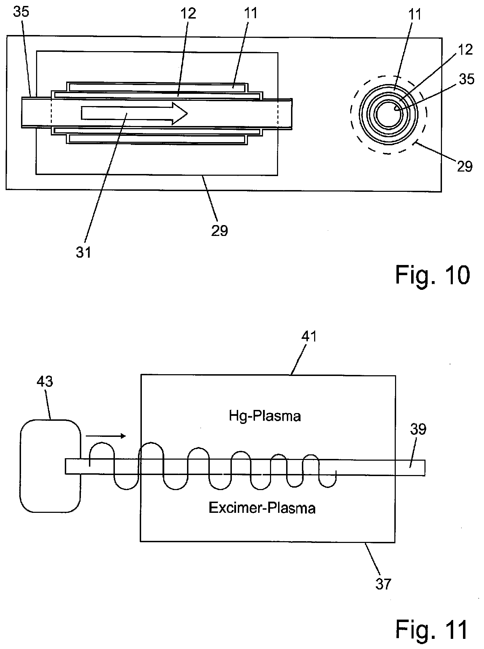

Eine solche Konfiguration kann planar, ähnlich wie in den Figuren 1 bis 7, oder als zylindrische Bauform, wie in Figur 10 angedeutet, ausgeführt sein.

In den Figuren 11 bis 13 sind weitere alternative Möglichkeiten zur Einkopplung von Energie dargestellt.

Die Konfiguration gemäß Figur 9, bei der die Plasmakammern 11 und 12 eine gemeinsame Wand 39 aufweisen, eignet sich besonders gut, um die Mikrowellen über eine oberflächengebundene Welle in die Plasmakammern 11 und 12 einzukoppeln. In der Figur 11 ist eine solche Konstellation dargestellt. Dabei ist die dielektrische Wand 39 etwas über die eigentlichen Kammern 11 und 12 hinaus verlängert, so dass dort ein Mikrowellengenerator 43 angeschlossen werden kann. Die von diesem Mikrowellengenerator 43 ausgestrahlte elektromagnetische Strahlung verbreitet sich als oberflächengebundene Welle entlang der Wand 39 und erreicht somit die Plasmakammern 11 und 12. Dort findet dann die gewünschte Anregung der Gase bzw. Gasgemische in den Kammern 11 und 12 statt.

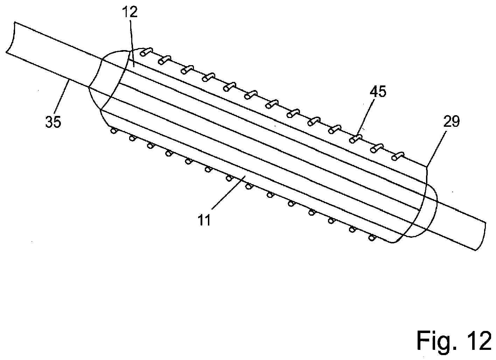

In der Figur 12 ist eine rohrförmige Anordnung angedeutet, bei der die Kammern 11 und 12 über Induktion, insbesondere durch induktive Kopplung elektrodenfrei angeregt werden. Die dazu erforderlichen Induktionsspule ist mit dem Bezugszeichen 45 bezeichnet.

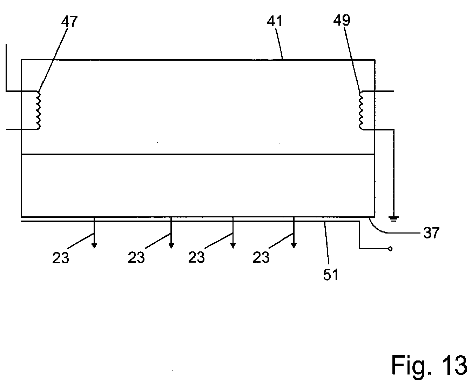

In der Figur 13 ist eine weitere Variante der Plasmakammern 11 und 12 dargestellt. Dabei wird die Plasmaskammer 11 über beheizte Elektroden 47, 49 die beispielsweise mit einer Wechselspannung mit 50Hz beaufschlagt werden, angeregt. Diese Anregung ist sehr weit verbreitet, funktioniert bestens und ist sehr betriebssicher.

Die Elektrode 49 hat bei diesem Ausführungsbeispiel eine Doppelfunktion, da sie auch noch im Zusammenhang mit der Dielectric Barrier Discharge - Anregung der Plasmakammer 12 benutzt wird. Parallel zu der Wand 37 ist eine DBD-Elektrode 41 angeordnet. Zwischen der Elektrode 49 und der DBD-Elektrode 51 wird eine hochfrequente Spannung mit einer Frequenz von mehreren kHz bis hin zu beispielsweise 100 kHz angelegt und führt dadurch zu der gewünschten Excimerbildung in der Plasmakammer 12.

Damit das UV-Licht 23 durch die Wand 37 und die DBD-Elektrode hindurch in das zu desinfizierende Abwasser gelangen kann, ist die DBD-Elektrode beispielsweise als Gitter- oder Netzstruktur ausgebildet, so dass das UV-Licht 23 durch die DBD-Elektrode 51 hindurch emittiert werden kann. Diese Arten der Anregung, sei es über ein Magnetron 17, einen Mikrowellengenerator 43, eine Induktionsspule 45, sowie Elektroden 47, 49 und 51 können selbstverständlich bei allen dargestellten Ausführungsformen entsprechend eingesetzt werden. Dabei werden in allen Fällen die erfindungsgemäßen Vorteile erreicht.

## Patentansprüche

1. Vorrichtung zur Erzeugung von UV-Licht und/oder Vakuum-UV-Licht mit einer Kammer (1), die mehrere gasgefüllte Plasmakammern (11, 12) umfasst, wobei eine erste Gruppe von Plasmakammern (11) mit einem quecksilberhaltigen ionisierbaren Gas gefüllt ist, und eine zweite Gruppe von Plasmakammern (12) mit Halogenen oder Edelgasen oder Mischungen oder chemischen Verbindungen dieser Gase gefüllt ist, die bei geeigneter Anregung Excimer bilden, und wobei
die Kammer (1) mindestens eine für UV-Licht und/oder Vakuum-UV-Licht durchlässige Scheibe (9, 9.1, 9.2) umfasst, **dadurch gekennzeichnet, dass** zwischen den Plasmakammern (11) der ersten Gruppe und der Scheibe (9, 9.1, 9.2) eine für UV-Licht und/oder VUV-Licht durchlässige Wärmedämmung angeordnet ist, wobei eine Plasmakammer (12) der zweiten Gruppe als diese Wärmedämmung für die eine Plasmakammer (11) der ersten Gruppe dient.

2. Vorrichtung nach Anspruch 1, **dadurch gekennzeichnet, dass** die erste Gruppe von Plasmakammern (11) UV-Licht mit einer Wellenlänge von 254 nm emittiert, und dass die zweite Gruppe von Plasmakammern (12) UV-Licht mit einer Wellenlänge von weniger als 250 nm, bevorzugt von weniger als 220 nm emittiert.

3. Vorrichtung nach Anspruch 1 oder 2, **dadurch gekennzeichnet, dass** die erste Gruppe von Plasmakammern (11) angeregt wird über Elektroden, wobei die Frequenz der Anregung einen Bereich zwischen etwa 50 Hz bis zu 10⁵ kHz umfasst, über eine induktive Kopplung (ICP), und/oder Mikrowellen.

4. Vorrichtung nach einem der vorhergehenden Ansprüche, **dadurch gekennzeichnet, dass** die zweite Gruppe von Plasmakammern (12) angeregt wird mit einer Dielectric Barrier Discharge (DBC), einer kapazitiven Entladung, einer induktiven Kopplung (ICP), und/oder Mikrowellen.

5. Vorrichtung nach einem der Ansprüche 3 oder 4, **dadurch gekennzeichnet, dass** die Mikrowellen als oberflächengebundene Welle in die Plasmakammern (11, 12) eingekoppelt werden.

6. Vorrichtung nach einem der vorhergehenden Ansprüche, **dadurch gekennzeichnet, dass** sie mindestens ein Magnetron (17) zur Erzeugung von Mikrowellen umfasst, und dass das mindestens eine Magnetron (17) außerhalb oder innerhalb der Kammer (1) angeordnet ist.

7. Vorrichtung nach einem der vorhergehenden Ansprüche, **dadurch gekennzeichnet, dass** die Kammer (1) mindestens eine Öffnung (10) aufweist durch die Mikrowellen in die Kammer (1) gelangen.

8. Vorrichtung nach einem der Ansprüche 3 bis 7, **dadurch gekennzeichnet, dass** außerhalb der Kammer (1) Elektroden zur induktiven Kopplung (ICP), einer Dielectric Barrier Discharge (DBC) und/oder einer kapazitiven Entladung vorgesehen sind.

9. Vorrichtung nach einem der vorhergehenden Ansprüche, **dadurch gekennzeichnet, dass** eine erste Reihe von Plasmakammern der ersten Gruppe (11) parallel zu einer ersten Scheibe (9.1) angeordnet ist.

10. Vorrichtung nach einem der vorhergehenden Ansprüche, **dadurch gekennzeichnet, dass** eine zweite Reihe von Plasmakammern der ersten Gruppe (11) parallel zu einer zweiten Scheibe (9.2) angeordnet ist.

11. Vorrichtung nach Anspruch 6, **dadurch gekennzeichnet, dass** in der Kammer (1) mindestens eine Öffnung (10) vorgesehen ist, und dass durch die mindestens eine Öffnung (10) die von dem mindestens einen Magnetron (17) erzeugten Mikrowellen in die Kammer (1) eingekoppelt werden.

12. Vorrichtung nach einem der vorhergehenden Ansprüche, **dadurch gekennzeichnet, dass** die Plasmakammern (11) der ersten Gruppe mit Queckksilberdampf und Edelgasen gefüllt ist.

13. Vorrichtung nach einem der vorhergehenden Ansprüche, **dadurch gekennzeichnet, dass** in den Plasmakammer (11, 12) ein Druck zwischen 10⁻² mbar und 10 bar herrscht.

## Claims

1. Device for producing UV light and/or vacuum-UV-light, comprising a chamber (1), comprising several gas-filled plasma chambers (11, 12), wherein a first group of plasma chambers (11) is filled with a mercury-containing ionizable gas, and a second group of plasma chambers (12) is filled with halogens or noble gases or mixtures or chemical compounds of these gases that form excimers upon suitable excitation and wherein the chamber (1) comprises at least one plate (9, 9.1, 9.2) that is transparent for UV light and/or vacuum-UV-light, **characterized in that** between the plasma chambers (11) of the first group and the plate (9, 9.1, 9.2) a thermal insulation that is transparent for UV light and/or VUV light is arranged, wherein a plasma chamber (12) of the second group serves as that thermal insulation for a plasma chamber (11) of the first group.

2. Device according to claim 1, **characterized in that** the first group of plasma chambers (11) emits UV light at a wavelength of 254 nm and **in that** the second group of plasma chambers (12) emits UV light at a wavelength of less than 250 nm, preferably of less than 220 nm.

3. Device according to claim 1 or 2, **characterized in that** the first group of plasma chambers (11) is excited by electrodes, wherein the frequency of excitation comprises a range between approximately 50 Hz up to 10⁵ kHz, by means of inductive coupling (ICP), and/or microwaves.

4. Device according to one of the preceding claims, **characterized in that** the second group of plasma chambers (12) is excited with a dielectric barrier discharge (DBC), a capacitive discharge, inductive coupling (ICP), and/or microwaves.

5. Device according to one of the claims 3 or 4, **characterized in that** the microwaves are injected as surface-sustained wave into the plasma chambers (11, 12) .

6. Device according to one of the preceding claims, **characterized in that** it comprises at least one magnetron (17) for generating microwaves and **in that** the at least one magnetron (17) is arranged outside or inside of the chamber (1).

7. Device according to one of the preceding claims, **characterized in that** the chamber (1) comprises at least one opening (10) through which the microwaves can pass into the chamber (1).

8. Device according to one of the claims 3 to 7, **characterized in that** outside of the chamber (1) electrodes for inductive coupling (ICP), a dielectric barrier discharge (DBC) and/or a capacitive discharge are provided.

9. Device according to one of the preceding claims, **characterized in that** a first row of plasma chambers of the first group (11) is arranged parallel to a first plate (9.1).

10. Device according to one of the preceding claims, **characterized in that** a second row of plasma chambers of the first group (11) is arranged parallel to a second plate (9.2).

11. Device according to claim 6, **characterized in that** in the chamber (1) at least one opening (10) is provided and **in that** through the at least one opening (10) the microwaves generated by the at least one magnetron (17) are injected into the chamber (1).

12. Device according to one of the preceding claims, **characterized in that** the plasma chambers (11) of the first group are filled with mercury vapor and noble gases.

13. Device according to one of the preceding claims, **characterized in that** in the plasma chambers (11, 12) a pressure between 10⁻² mbar and 10 bar exists.

## Revendications

1. Dispositif destiné à générer une lumière UV et/ou une lumière UV sous vide, comprenant une chambre (1) qui comporte plusieurs chambres à plasma (11, 12) remplies de gaz, un premier groupe de chambres à plasma (11) étant rempli d'un gaz ionisable contenant du mercure, et un deuxième groupe de chambres à plasma (12) comportant des halogènes ou des gaz nobles ou des mélanges ou des composés chimiques de ces gaz, qui forment des excimères lorsque lesdits groupes sont excités adéquatement, et la chambre (1) comportant au moins une vitre (9, 9.1, 9.2) transparente à la lumière UV et/ou à la lumière UV sous vide, **caractérisé en ce qu'**une isolation thermique transparente à la lumière UV et/ou à la lumière UV sous vide est agencée entre les chambres à plasma (11) du premier groupe et la vitre (9, 9.1, 9.2), une chambre à plasma (12) du deuxième groupe servant de ladite isolation thermique pour l'une des chambres à plasma (11) du premier groupe.

2. Dispositif selon la revendication 1, **caractérisé en ce que** le premier groupe de chambres à plasma (11) émet une lumière UV d'une longueur d'onde de 254 nm, et **en ce que** le deuxième groupe de chambres à plasma (12) émet une lumière UV d'une longueur d'onde inférieure à 250 nm, de préférence inférieure à 220 nm.

3. Dispositif selon la revendication 1 ou 2, **caractérisé en ce que** le premier groupe de chambres à plasma (11) est excité par des électrodes, la fréquence de l'excitation englobant une plage comprise entre environ 50 Hz et 10⁵ kHz, au moyen d'un couplage inductif (ICP), et/ou de micro-ondes.

4. Dispositif selon l'une quelconque des revendications précédentes, **caractérisé en ce que** le deuxième groupe de chambres à plasma (12) est excité au moyen d'une décharge à barrière diélectrique (DBC), d'une décharge capacitive, d'un couplage inductif (ICP) et/ou de micro-ondes.

5. Dispositif selon l'une quelconque des revendications 3 ou 4, **caractérisé en ce que** les micro-ondes sont injectées sous la forme d'une onde liée en surface dans les chambres à plasma (11, 12).

6. Dispositif selon l'une quelconque des revendications précédentes, **caractérisé en ce qu'**il comporte au moins un magnétron (17) destiné à générer des micro-ondes, et **en ce que** le ou les magnétrons (17) sont agencés à l'extérieur ou à l'intérieur de la chambre (1).

7. Dispositif selon l'une quelconque des revendications précédentes, **caractérisé en ce que** la chambre (1) comprend au moins une ouverture (10) par laquelle les micro-ondes parviennent dans la chambre (1).

8. Dispositif selon l'une quelconque des revendications 3 à 7, **caractérisé en ce que** des électrodes destinées au couplage inductif (ICP), à une décharge à barrière électrique (DBC) et/ou à une décharge capacitive sont prévues à l'extérieur de la chambre (1).

9. Dispositif selon l'une quelconque des revendications précédentes, **caractérisé en ce qu'**une première rangée de chambres à plasma du premier groupe (11) est agencée parallèlement à une première vitre (9.1).

10. Dispositif selon l'une quelconque des revendications précédentes, **caractérisé en ce qu'**une deuxième rangée de chambres à plasma du premier groupe (11) est agencée parallèlement à une deuxième vitre (9.2).

11. Dispositif selon la revendication 6, **caractérisé en ce qu'**au moins une ouverture (10) est ménagée dans la chambre (1) et **en ce que** les micro-ondes générées par le ou les magnétrons (17) sont injectées dans la chambre (1) par l'ouverture ou les ouvertures (10).

12. Dispositif selon l'une quelconque des revendications précédentes, **caractérisé en ce que** les chambres à plasma (11) du premier groupe sont remplies de vapeur de mercure et de gaz nobles.

13. Dispositif selon l'une quelconque des revendications précédentes, **caractérisé en ce qu'**une pression comprise entre 10⁻² mbar et 10 bar règne dans la chambre à plasma (11, 12).
